# EUROPEAN PATENT APPLICATION

(11) **EP 4 745 441 A1**
(43) Date of publication of application: **20.05.2026**
(21) Application number: 24839768.9
(22) Date of filing: 09.07.2024
(51) Int. Cl.: F16K 17/04

(54) **ELECTROMAGNETIC RELIEF VALVE**

(30) Priority: 10.07.2023 JP 2023112833
(71) Applicant: KYB Corporation, Minato-ku, Tokyo 105-5128 (JP)
(72) Inventor: SAITO, Keiji, Tokyo 105-5128 (JP); TANAKA, Yuta, Tokyo 105-5128 (JP)
(74) Representative: Grünecker Patent- und Rechtsanwälte PartG mbB
(86) International application number: PCT/JP2024/024845
(87) International publication number: WO 2025/013878

(57) **Abstract**

An electromagnetic relief valve (100) comprising: a pilot poppet (20) configured to allow or shut off communication between a passage on a high-pressure side and a passage on a low-pressure side; and a biasing unit (S) configured to bias the pilot poppet (20) in the valve closing direction. The plunger portion (72) is provided with a through hole (72a) configured to guide working fluid to a spring chamber (78), the working fluid being discharged from the passage on the high-pressure side when the pilot poppet (20) is opened. The electromagnetic relief valve (100) further comprises a through hole (72b) discharging the working fluid from the spring chamber (78) to outside.

## Description

### TECHNICAL FIELD

The present invention relates to an electromagnetic relief valve.

### BACKGROUND ART

JP2022-12406A discloses an electromagnetic relief valve that prevents a pressure of working oil in a high-pressure passage from becoming abnormally high by being opened when the pressure of the working oil in the high-pressure passage reaches a set pressure to allow the working oil to escape from the high-pressure passage to a low-pressure passage.

In addition, the electromagnetic relief valve described in JP2022-12406A includes a solenoid unit that makes it possible to change the set pressure.

### SUMMARY OF INVENTION

The electromagnetic relief valve described in JP2022-12406A is inspected at the time of shipment, transported, and then attached to hydraulic equipment such as a valve block. In the electromagnetic relief valve described in JP2022-12406A, vibrations and other disturbances may cause air to enter inside the valve during transportation.

For example, when air enters a spring chamber, in which a spring that biases a plunger of the solenoid unit is accommodated, the air is expanded and contracted as the plunger is moved, and there is a risk that the operation of the electromagnetic relief valve becomes unstable.

The present invention has been made in view of the above problems, and an object thereof is to provide an electromagnetic relief valve that can prevent air from being held and trapped in a biasing member chamber, in which a biasing member that biases a plunger is accommodated.

According to one aspect of the present invention, an electromagnetic relief valve includes: a valve body configured to allow or shut off communication between a passage on a high-pressure side and a passage on a low-pressure side; and a biasing unit configured to bias the valve body in a valve closing direction, wherein the biasing unit has: a rod that presses the valve body; a plunger portion fixed to the rod; a first biasing member provided on an opposite side of the plunger portion from the valve body with the plunger portion interposed therebetween; a biasing member chamber in which the first biasing member is accommodated; and a coil configured to apply, to the plunger portion, an opposing counterforce against a biasing force exerted by the first biasing member when electric current is applied, the rod is provided with a first communicating passage configured to guide working fluid to the biasing member chamber, the working fluid being discharged from the passage on the high-pressure side when the valve body is opened, the discharge flow path being configured to discharge the working fluid to outside at a pressure lower than a pressure in the first communicating passage when the working fluid on the high-pressure side is guided from the biasing member chamber.

### BRIEF DESCRIPTION OF DRAWINGS

[FIG. 1] FIG. 1 is a sectional view of an electromagnetic relief valve according to a first embodiment of the present invention.
[FIG. 2] FIG. 2 is a sectional view of a modification of the electromagnetic relief valve according to the first embodiment of the present invention.
[FIG. 3] FIG. 3 is a sectional view of a modification of the electromagnetic relief valve according to the first embodiment of the present invention.
[FIG. 4] FIG. 4 is a sectional view of a modification of the electromagnetic relief valve according to the first embodiment of the present invention.
[FIG. 5] FIG. 5 is a sectional view of the electromagnetic relief valve according to a second embodiment of the present invention.
[FIG. 6] FIG. 6 is a sectional view of the electromagnetic relief valve according to a third embodiment of the present invention.
[FIG. 7] FIG. 7 is a sectional view of the electromagnetic relief valve according to a fourth embodiment of the present invention.
[FIG. 8] FIG. 8 is a sectional view of a modification of the electromagnetic relief valve according to the fourth embodiment of the present invention.
[FIG. 9] FIG. 9 is a sectional view of the electromagnetic relief valve according to a fifth embodiment of the present invention.
[FIG. 10] FIG. 10 is a sectional view of the electromagnetic relief valve according to a sixth embodiment of the present invention.
[FIG. 11] FIG. 11 is a sectional view of a modification of the electromagnetic relief valve according to the sixth embodiment of the present invention.
[FIG. 12] FIG. 12 is a sectional view of a modification of the electromagnetic relief valve according to the second embodiment of the present invention.
[FIG. 13] FIG. 13 is a sectional view of a modification of the electromagnetic relief valve according to the fifth embodiment of the present invention.

### DESCRIPTION OF EMBODIMENTS

### <First Embodiment>

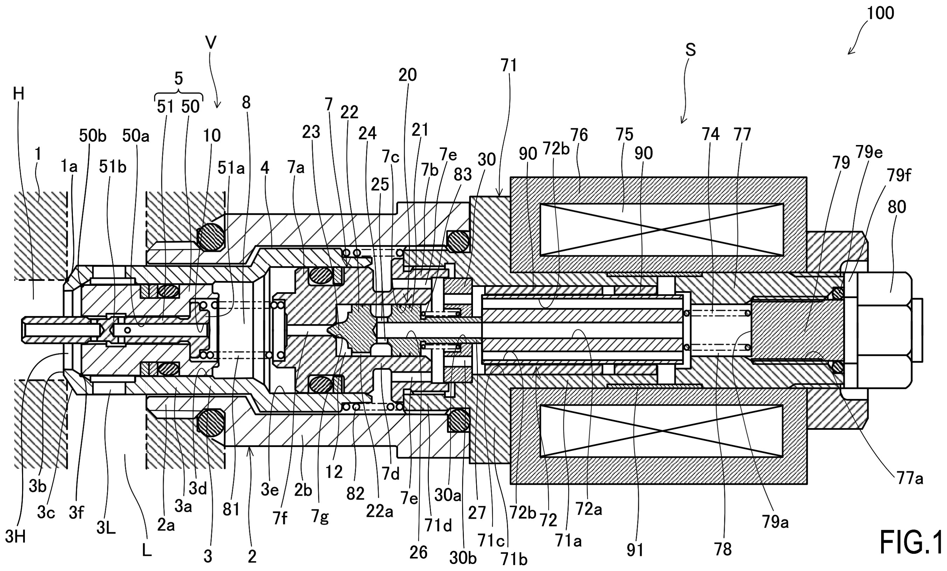

An electromagnetic relief valve 100 according to a first embodiment of the present invention will be described with reference to FIG. 1. FIG. 1 is a sectional view of the electromagnetic relief valve 100.

The electromagnetic relief valve 100 is a pilot-operated electromagnetic relief valve of an inverse proportional type. The term "inverse proportional type" means a relief valve that is configured such that a relief pressure is decreased as the current value applied to a coil 75 of a biasing unit S, which will be described later, is increased.

The electromagnetic relief valve 100 is opened when the pressure of working oil in a high-pressure passage H reaches a set pressure (relief pressure), and prevents the pressure of the working oil in the high-pressure passage H from becoming abnormally high by allowing the working oil to escape from the high-pressure passage H to a low-pressure passage L. In addition, the electromagnetic relief valve 100 has an anti-void function and prevents the occurrence of cavitation by being opened when the high-pressure passage H becomes negative pressure and by supplying the working oil from the low-pressure passage L to the high-pressure passage H.

As shown in FIG. 1, the electromagnetic relief valve 100 is attached to an apparatus main body 1 by screw fastening. The apparatus main body 1 is a main body of hydraulic equipment such as a hydraulic cylinder, a hydraulic pump, a hydraulic motor, a valve block having a plurality of valves, and so forth. In this embodiment, a case where the working oil is used as working fluid for the apparatus main body 1 will be described as an example, but the working fluid may be other liquid such as working water.

The high-pressure passage H and the low-pressure passage L are provided in the apparatus main body 1 with the electromagnetic relief valve 100 as a boundary. In the apparatus main body 1, a seat portion 1a serving as a first valve seat, on which a suction poppet 3, which will be described later, is seated, is provided between the high-pressure passage H and the low-pressure passage L. Note that the apparatus main body 1 is not limited to the main body of the hydraulic equipment, and may be a block body installed between respective hydraulic equipment.

As shown in FIG. 1, the electromagnetic relief valve 100 includes a valve unit V that allows or shuts off the communication between the high-pressure passage H and the low-pressure passage L and the biasing unit S that adjusts the set pressure (the relief pressure).

As shown in FIG. 1, the valve unit V includes: a valve housing 2 that is attached to the apparatus main body 1 in which the high-pressure passage H and the low-pressure passage L are provided; the suction poppet 3 that is provided in the valve housing 2 and that allows or shuts off the communication between the high-pressure passage H and the low-pressure passage L by being separated from the seat portion 1a or seated onto the seat portion 1a; a main poppet 5 serving as a main valve body that is provided in the suction poppet 3 and that allows or shuts off the communication between the high-pressure passage H and the low-pressure passage L by being separated from a seat portion 3f formed on the suction poppet 3 or seated onto the seat portion 3f; a back pressure chamber 8 in the suction poppet 3 to which the working oil for biasing the main poppet 5 in the valve closing direction is guided from the high-pressure passage H; a sleeve 7 serving as an accommodating member that partitions the back pressure chamber 8 with the main poppet 5; a pilot passage 10 that is formed in the main poppet 5 and communicates the high-pressure passage H with the back pressure chamber 8; a drain chamber 12 that is formed in the sleeve 7 and to which the working oil in the back pressure chamber 8 is discharged; a communicating passage 7f that is formed in the sleeve 7 and communicates the drain chamber 12 with the back pressure chamber 8; and a pilot poppet 20 serving as a pilot valve body that is formed in the sleeve 7 and opens and closes the communicating passage 7f. Note that, the pilot poppet 20 also serves as a "valve body" in the scope of claims.

As shown in FIG. 1, the valve housing 2 is a member formed to have a cylindrical shape having a first cylindrical portion 2a attached to the apparatus main body 1 and a second cylindrical portion 2b having a larger diameter than the first cylindrical portion 2a. The valve housing 2 is joined to a base member 71 of the biasing unit S.

The suction poppet 3 is a member formed to have a bottomed cylindrical shape having a cylindrical portion 3a and a bottom portion 3b. The suction poppet 3 is provided in the valve housing 2 so as to be movable in the axial direction, and a part thereof projects out from an opening of the first cylindrical portion 2a of the valve housing 2. A high-pressure port 3H communicating with the high-pressure passage H is provided in the bottom portion 3b of the suction poppet 3, and a low-pressure port 3L communicating with the low-pressure passage L is provided in the vicinity of the bottom portion 3b of the cylindrical portion 3a.

A corner portion 3c formed between the cylindrical portion 3a and the bottom portion 3b of the suction poppet 3 is formed to have a tapered shape, and when the corner portion 3c is seated onto the seat portion 1a of the apparatus main body 1, the communication between the high-pressure passage H and the low-pressure passage L through between the apparatus main body 1 and the suction poppet 3 is shut off. On the bottom portion 3b side of the suction poppet 3, a first accommodating hole 3d that accommodates the main poppet 5 is provided, and at an end portion on the opposite side from the bottom portion 3b, a second accommodating hole 3e that has a larger diameter than the first accommodating hole 3d and in which a part of the sleeve 7 is accommodated is provided.

A communicating passage 4 that is constantly communicated with the low-pressure passage L is formed between an inner peripheral surface of the valve housing 2 and an outer peripheral surface of the suction poppet 3.

The main poppet 5 has a main body portion 50 that is capable of sliding inside the first accommodating hole 3d and a pilot piston 51 that is capable of sliding inside a sliding hole 50a that is formed so as to penetrate through the main body portion 50 in the axial direction.

The main body portion 50 has a valve portion 50b that is seated onto the seat portion 3f that is formed on the inner side of the corner portion 3c of the suction poppet 3. When the valve portion 50b is seated onto the seat portion 3f, the communication between the high-pressure passage H and the low-pressure passage L through between the suction poppet 3 and the main poppet 5 is shut off. A seal member (an O-ring) that seals a gap between the main body portion 50 and the suction poppet 3 is provided between an outer peripheral surface of the main body portion 50 and an inner peripheral surface of the suction poppet 3.

The pilot piston 51 has: a flange portion 51a that is provided so as to face the back pressure chamber 8, which is a space defined by the inner peripheral surface of the suction poppet 3, the main poppet 5, and the sleeve 7; and a columnar shaft portion 51b that extends from the flange portion 51a in the axial direction and that is inserted into the sliding hole 50a. A tip end portion of the shaft portion 51b projects out from a tip end surface of the main body portion 50 facing the high-pressure passage H. In addition, the pilot piston 51 includes the pilot passage 10 that communicates the high-pressure passage H with the back pressure chamber 8. The pilot passage 10 includes a restrictor that applies resistance to the working oil flowing through the pilot passage 10.

The sleeve 7 has: a tip end portion 7a that is inserted into the suction poppet 3; a base-end portion 7b that is connected to the base member 71 of the biasing unit S, which will be described later; an accommodating hole 7c that opens at an end surface of the base-end portion 7b on the biasing unit S side in the axial direction; an intermediate portion 7d that is provided between the tip end portion 7a and the base-end portion 7b and that has an exposing outer peripheral surface between the suction poppet 3 and the base member 71; and a plurality of through holes 7e that penetrate through the base-end portion 7b in the axial direction on the outer circumferential side of the accommodating hole 7c of the base-end portion 7b. The sleeve 7 slidably supports the suction poppet 3 in the tip end portion 7a. A seal member (an O-ring) that seals a gap between the sleeve 7 and the suction poppet 3 is provided between an outer peripheral surface of the tip end portion 7a of the sleeve 7 and the inner peripheral surface of the suction poppet 3.

In addition, the sleeve 7 is formed with the communicating passage 7f that has one end opening to the back pressure chamber 8 and the other end opening to a bottom surface of the accommodating hole 7c and that communicates the back pressure chamber 8 with the accommodating hole 7c. Note that, in this embodiment, the communicating passage 7f serves as a "passage on a high-pressure side" in the scope of claims.

A seat portion 7g, onto and from which a valve portion 23 of the pilot poppet 20 is seated and separated, is provided at an opening end of the communicating passage 7f that opens to the accommodating hole 7c. The seat portion 7g is formed such that its central axis coincides with the central axis of the accommodating hole 7c.

The drain chamber 12 is a space defined between the bottom surface of the accommodating hole 7c and the pilot poppet 20 in the accommodating hole 7c, and the working oil discharged from the back pressure chamber 8 through the communicating passage 7f flows into the drain chamber 12.

As shown in FIG. 1, the pilot poppet 20 is a member formed to have a substantially columnar shape and is slidably accommodated in the accommodating hole 7c of the sleeve 7. The pilot poppet 20 has: a first sliding portion 21 and a second sliding portion 22 that slide on an inner peripheral surface of the accommodating hole 7c and that are provided by being arranged in succession in this order from the biasing unit S side; the valve portion 23 that is formed to have a conical shape projecting from the second sliding portion 22 in the axial direction; an annular groove 24 that is provided between the first sliding portion 21 and the second sliding portion 22; a plurality of communication holes 25 that open to a bottom surface of the annular groove 24; a communicating passage 26 that communicates with the communication holes 25 and extends in the axial direction of the pilot poppet 20; and a rod portion 27 that has a smaller diameter than the first sliding portion 21 and that extends from an end surface of the first sliding portion 21 toward a plunger 72. Note that, the accommodating hole 7c of the sleeve 7 serves as a "valve body accommodating chamber" in the scope of claims.

The first sliding portion 21 is formed such that its outer diameter is approximately the same size as an inner diameter of the accommodating hole 7c. As a result, the space between the first sliding portion 21 and the accommodating hole 7c is substantially sealed.

The outer peripheral surface of the second sliding portion 22 is formed with a communicating passage 22a that is formed by a groove or a planar notch extending along the axial direction. With such a configuration, the working oil discharged from the communicating passage 7f to the drain chamber 12 flows into the annular groove 24 through the communicating passage 22a formed in the outer peripheral surface of the second sliding portion 22. As described above, because the space between the first sliding portion 21 and the accommodating hole 7c is substantially sealed, the working oil that has flowed into the annular groove 24 is guided to the communicating passage 26 through the communication holes 25.

The pilot poppet 20 is slidably supported by the accommodating hole 7c that is formed coaxially with the seat portion 7g. In other words, the pilot poppet 20 is supported by the accommodating hole 7c such that its central axis is not inclined with respect to the central axis of the seat portion 7g. As described above, by suppressing the pilot poppet 20 from being inclined with respect to the seat portion 7g, uneven contact with the seat portion 7g when the valve portion 23 is seated onto the seat portion 7g is prevented. Thus, damage or deformation of the seat portion 7g is suppressed, and as a result, it is possible to improve a seating performance when the valve portion 23 is seated onto the seat portion 7g.

As shown in FIG. 1, a spring 81 is provided between the flange portion 51a of the pilot piston 51 and the sleeve 7, and a spring 82 is provided between the suction poppet 3 and the base member 71. The spring 81 biases the pilot piston 51 such that the flange portion 51a abuts against the main body portion 50 of the main poppet 5, and biases the main body portion 50 via the flange portion 51a such that the main body portion 50 is seated onto the seat portion 3f of the suction poppet 3. On the other hand, the spring 82 biases the suction poppet 3 such that the corner portion 3c of the suction poppet 3 is seated onto the seat portion 1a of the apparatus main body 1.

Next, the biasing unit S will be described.

The biasing unit S has: the base member 71; the plunger 72 serving as a plunger portion that is slidably accommodated in the base member 71 and that presses the pilot poppet 20; a spring 74 serving as a first biasing member that is provided on the opposite side of the plunger 72 from the pilot poppet 20 with the plunger 72 interposed therebetween and that biases the pilot poppet 20 in the valve closing direction via the plunger 72; the coil 75 that is supported by the base member 71 and that applies, to the plunger 72, an opposing counterforce against the biasing force exerted by the spring 74 when electric current is applied; a yoke 76 that is provided so as to surround the coil 75; a fixed iron core 77 that is attached to the yoke 76 and generates magnetic force when the electric current is applied to the coil 75; and an adjusting member 79 that is attached to the fixed iron core 77 so as to be movable in the axial direction. In this embodiment, a solenoid unit is formed by the base member 71, the plunger 72, the coil 75, the yoke 76, and the fixed iron core 77.

The base member 71 is a member made of a cylindrical magnetic material. The base member 71 has: a cylindrical portion 71a that is inserted in to the yoke 76; a flange portion 71b that has a larger diameter than the cylindrical portion 71a and that restricts movement of the coil 75 in the axial direction; an accommodating hole 71c that is formed across the cylindrical portion 71a and the flange portion 71b and that accommodates the plunger 72; and a joint portion 71d that is provided on the opposite side of the flange portion 71b from the cylindrical portion 71a with the flange portion 71b interposed therebetween.

The cylindrical portion 71a is connected to the fixed iron core 77 via a tube member 91. Guide members 90 that slidably support the plunger 72 are provided in the accommodating hole 71c.

The joint portion 71d is formed to have a cylindrical shape. A female thread is formed on the inner peripheral surface of the joint portion 71d, and a male thread is formed on the outer peripheral surface thereof. The sleeve 7 and the base member 71 are joined by screwing the female thread formed on the inner peripheral surface of the joint portion 71d with a male thread formed on the outer peripheral surface of the base-end portion 7b of the sleeve 7. In addition, the valve housing 2 and the base member 71 are joined by screwing the male thread formed on the outer peripheral surface of the joint portion 71d with a female thread formed on the inner peripheral surface of the second cylindrical portion 2b of the valve housing 2.

The biasing unit S further has: a spring 83 that is provided inside the joint portion 71d and biases the pilot poppet 20 in the valve closing direction; and a spring seat 30 that supports one end of the spring 83. The spring seat 30 is formed with: an insertion hole 30a through which the rod portion 27 of the pilot poppet 20 is inserted; and a plurality of through holes 30b through which working oil passes. Note that, in this embodiment, the spring 83 serves as a "second biasing member" in the scope of claims.

The plunger 72 is made of a magnetic material. The plunger 72 has a through hole 72a and a through hole 72b that are formed to penetrate therethrough in the axial direction and through which working oil flows. In this embodiment, the through hole 72a serves as a "first communicating passage" in the scope of claims.

The spring 74 is formed by a coil spring, with one end supported by the adjusting member 79 and the other end supported by the plunger 72. The biasing force exerted by the spring 74 acts so as to bias the pilot poppet 20 in the valve closing direction via the plunger 72. In other words, the spring 74 biases the pilot poppet 20 such that the valve portion 23 of the pilot poppet 20 is seated onto the seat portion 7g.

When the electric current is applied, the coil 75 imparts, to the plunger 72, thrust opposing to the biasing force exerted by the spring 74. As the electric current applied to the coil 75 is increased, the biasing force exerted by the spring 74 acting on the pilot poppet 20 via the plunger 72 is decreased. As a result, the pressure required to separate the valve portion 23 of the pilot poppet 20 from the seat portion 7g, the so-called cracking pressure, is decreased. In the electromagnetic relief valve 100, by controlling the electric current applied to the coil 75 to change the biasing force exerted by the spring 74 acting on the pilot poppet 20, it is possible to change the set pressure (the relief pressure) at which the pilot poppet 20 is opened.

The fixed iron core 77 is made of a magnetic material. The fixed iron core 77 has a through hole 77a. A female thread that is screwed with the adjusting member 79 is formed on the axially outer side of the through hole 77a. A spring chamber 78 serving as a biasing member chamber, in which the spring 74 is accommodated, is formed between the plunger 72 in the through hole 77a of the fixed iron core 77 and the adjusting member 79.

The adjusting member 79 is a so-called flat-tipped set screw that is a columnar member on the outer peripheral surface of which a male thread is formed. The adjusting member 79 has an end surface 79a against which one end of the spring 74 abuts. By moving the adjusting member 79 in the axial direction relative to the fixed iron core 77, it is possible to adjust the biasing force exerted by the spring 74. Movement of the adjusting member 79 in the axial direction is restricted by tightening a lock nut 80. The adjusting member 79 serves as a "support member" in the scope of claims.

Next, the operation of the electromagnetic relief valve 100 will be described.

The working oil in the high-pressure passage H is guided to the communicating passage 7f through the pilot passage 10 and the back pressure chamber 8. When the pressure of the working oil guided to the communicating passage 7f reaches the set pressure (the cracking pressure) of the pilot poppet 20 set by the biasing unit S, in other words, when the biasing force that is generated by the pressure of the working oil guided to the communicating passage 7f and that acts on the pilot poppet 20 in the valve opening direction becomes larger than the biasing force exerted by the biasing unit S acting on the pilot poppet 20 in the valve closing direction, the valve portion 23 of the pilot poppet 20 is separated from the seat portion 7g.

When the valve portion 23 of the pilot poppet 20 is separated from the seat portion 7g, the working oil in the back pressure chamber 8 flows into the spring chamber 78 through the communicating passage 7f, the drain chamber 12, the communicating passage 22a, the annular groove 24, the communication holes 25, the communicating passage 26, and the through hole 72a. The working oil that has flowed into the spring chamber 78 is discharged to the low-pressure passage L through the through hole 72b, the through holes 30b, the through holes 7e, the outside region of the intermediate portion 7d, and the communicating passage 4. Note that, the flow path from the spring chamber 78 to the low-pressure passage L in this embodiment serves as a "discharge flow path" in the scope of claims, and the communication holes 25 and the communicating passage 26 serve as a "second communicating passage" in the scope of claims.

The working oil is constantly supplied from the high-pressure passage H to the back pressure chamber 8 through the pilot passage 10. However, the supply of the working oil from the high-pressure passage H to the back pressure chamber 8 is limited by the restrictor provided in the pilot passage 10. Therefore, when the valve portion 23 is separated from the seat portion 7g and the working oil in the back pressure chamber 8 is discharged, the pressure in the back pressure chamber 8 gradually becomes lower than the pressure in the high-pressure passage H.

As described above, when the pressure in the back pressure chamber 8 is decreased, the biasing force generated by the pressure in the back pressure chamber 8 acting in the direction, in which the main body portion 50 of the main poppet 5 is seated onto the seat portion 3f of the suction poppet 3, is decreased. Then, the pressure difference between the pressure in the back pressure chamber 8 and the pressure in the high-pressure passage H exceeds a preset pressure difference, the main body portion 50 of the main poppet 5 is separated from the seat portion 3f of the suction poppet 3, and the main poppet 5 is opened. As a result, the working oil is discharged from the high-pressure passage H to the low-pressure passage L. As a result, the pressure in the high-pressure passage H is prevented from becoming abnormally high. Note that, in this embodiment, the above-described passage from the drain chamber 12 to the low-pressure passage L serves as a "passage on a low-pressure side" in the scope of claims.

Incidentally, air may enter the electromagnetic relief valve 100 while the electromagnetic relief valve 100 configured in this way is being transported. In the electromagnetic relief valve 100 of the inversely proportional type, in which the set pressure (the relief pressure) is increased as the amount of the electric current applied to the coil 75 is increased, as in this embodiment, when the pilot poppet 20 is moved to be opened, the plunger 72 is also moved accordingly and the volume of the spring chamber 78 is reduced. At this time, due to the air that has entered the electromagnetic relief valve 100, the plunger 72 may oscillates due to excessive opening (overshooting) of the pilot poppet 20. When the plunger 72 oscillates in this manner, the pressure in the apparatus being relieved may fluctuate, potentially leading to the generation of vibration and noise.

Therefore, in this embodiment, in order to prevent air from being trapped in the spring chamber 78, as described above, the electromagnetic relief valve 100 is configured such that the working oil discharged from the back pressure chamber 8 during the relief operation is discharged to the low-pressure passage L through the spring chamber 78. With such a configuration, because the air trapped in the spring chamber 78 can be discharged to the low-pressure passage L together with the working oil, it is possible to suppress the occurrence of the oscillation of the plunger 72 due to the trapped air.

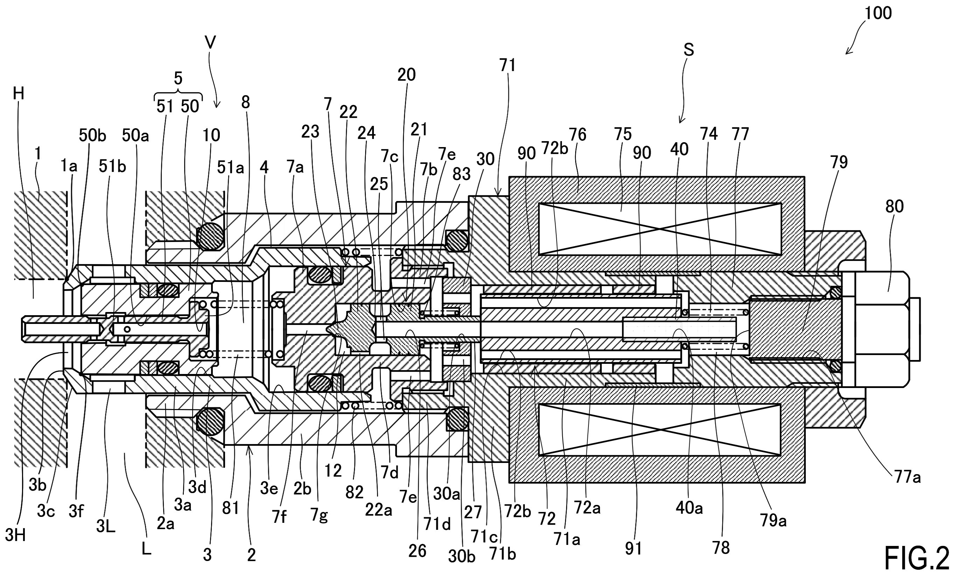

Next, modifications of the electromagnetic relief valve 100 will be described with reference to FIGs. 2 to 4.

The electromagnetic relief valve 100 according to the modification shown in FIG. 2 differs from the electromagnetic relief valve 100 according to the first embodiment in that a pipe 40 serving as a guide portion is attached to the plunger 72.

As shown in FIG. 2, the pipe 40 is attached to the plunger 72 so as to extend from an end surface of the plunger 72 toward the spring chamber 78. The pipe 40 has a through hole 40a that communicates with the through hole 72a of the plunger 72. The working oil that has passed through the through hole 72a of the plunger 72 is guided to the distal side of the spring chamber 78 (the adjusting member 79 side) through the through hole 40a of the pipe 40. The air tends to be held and retained on the distal side of the spring chamber 78. Thus, by providing such a pipe 40 continuous with the through hole 72a of the plunger 72, it is possible to guide the working oil to the distal side of the spring chamber 78. As a result, because the working oil can be caused to flow to the distal side of the spring chamber 78, it is possible to more reliably discharge the air trapped in the spring chamber 78.

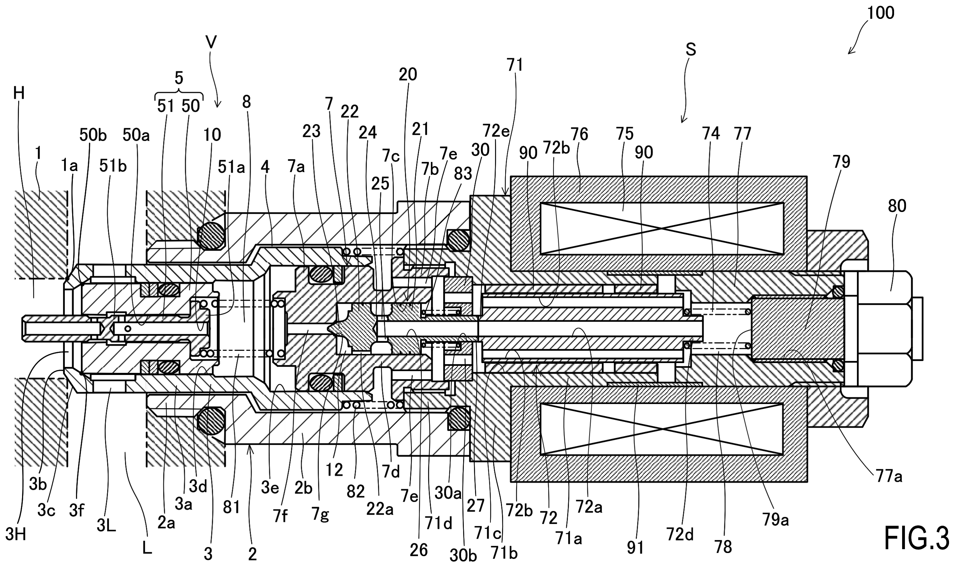

Next, the modification shown in FIG. 3 will be described. The electromagnetic relief valve 100 according to the modification shown in FIG. 3 differs from the electromagnetic relief valve 100 according to the first embodiment in that a guide portion 72d is formed integrally with the plunger 72, and that a projected portion 72e for pressing the pilot poppet 20 is provided on the plunger 72.

In this modification, the guide portion 72d is formed to project out from the end surface of the plunger 72 on the spring chamber 78 side. The through hole 72a opens at a tip end surface of the guide portion 72d. By providing such a guide portion 72d, it is possible to guide the working oil to the distal side of the spring chamber 78. As a result, because the working oil can be caused to flow to the distal side of the spring chamber 78, it is possible to more reliably discharge the air trapped in the spring chamber 78.

In addition, the projected portion 72e is formed to project out from an end surface of the plunger 72 on the pilot poppet 20 side. The diameter of the projected portion 72e is smaller than that of other portions (for example, approximately the same as the diameter of the rod portion 27). In the electromagnetic relief valve 100 shown in FIG. 2, in order to prevent the uneven contact between the pilot poppet 20 and the plunger 72, it is necessary to perform a surface alignment on the entire end surface of the plunger 72 on the pilot poppet 20 side. In contrast, in this modification (in the modification shown in FIG. 3), because the surface alignment needs to be performed only on a tip end surface of the projected portion 72e, it is possible to shorten the processing time.

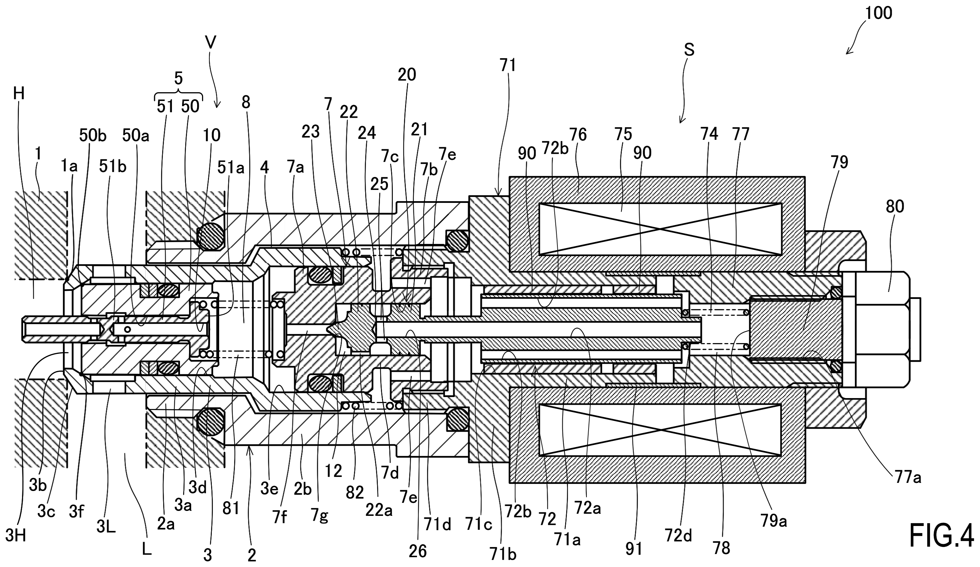

Next, the modification shown in FIG. 4 will be described. The electromagnetic relief valve 100 according to the modification shown in FIG. 4 differs from the electromagnetic relief valve 100 according to the modification shown in FIG. 3 in that the pilot poppet 20 and the plunger 72 of the modification shown in FIG. 3 are integrally configured.

In this modification, because the pilot poppet 20 and the plunger 72 are configured integrally, in addition to the effects of the above-described modification, it is possible to reduce the number of parts. Furthermore, in this modification, it is possible to omit the spring seat 30 and the spring 83 that biases the pilot poppet 20. As a result, it is possible to further reduce the number of parts.

### <Second Embodiment>

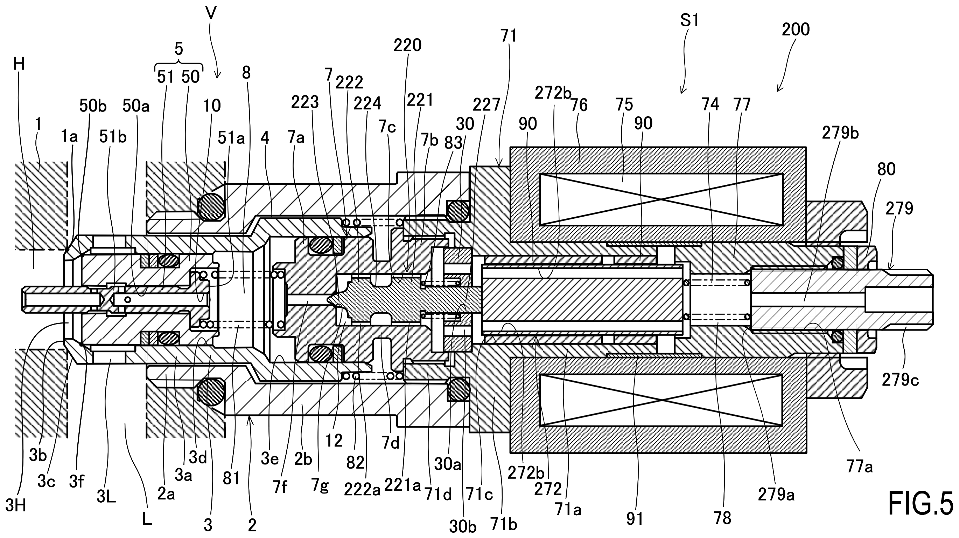

An electromagnetic relief valve 200 according to a second embodiment will be described with reference to FIG. 5. FIG. 5 is a sectional view of the electromagnetic relief valve 200.

In contrast to the electromagnetic relief valve 100 according to the first embodiment in which the working oil discharged from the back pressure chamber 8 passes through the inside of the pilot poppet 20, the electromagnetic relief valve 200 according to the second embodiment differs in that the working oil discharged from the back pressure chamber 8 passes through the outside of a pilot poppet 220. In addition, in contrast to the electromagnetic relief valve 100 according to the first embodiment in which the working oil guided to the spring chamber 78 is discharged to the low-pressure passage L through the inside of the electromagnetic relief valve 100, the electromagnetic relief valve 200 according to the second embodiment differs in that the working oil guided to the spring chamber 78 is directly discharged to the outside. Specifically, in contrast to the electromagnetic relief valve 100 according to the first embodiment in which the sleeve 7 includes the through holes 7e, the electromagnetic relief valve 200 according to the second embodiment differs in that the sleeve 7 does not include the through holes 7e, and in contrast to the electromagnetic relief valve 100 according to the first embodiment in which the adjusting member 79 that is attached to the fixed iron core 77 does not have a flow path communicating with the outside, the electromagnetic relief valve 200 according to the second embodiment differs in that an adjusting member 279, in which a through hole 279b that connects the spring chamber 78 and the outside is provided, is attached to the fixed iron core 77. In the following, only points different from the electromagnetic relief valve 100 according to the first embodiment will be described, and the same configurations are given the same reference numerals and descriptions thereof will be omitted.

As shown in FIG. 5, the electromagnetic relief valve 200 includes: the pilot poppet 220 serving as the pilot valve body that is provided in the sleeve 7 and that opens and closes the communicating passage 7f; and a biasing unit S1 for adjusting the set pressure (the relief pressure).

As shown in FIG. 5, the pilot poppet 220 is a member that is formed to have a substantially columnar shape and is slidably accommodated in the accommodating hole 7c of the sleeve 7. The pilot poppet 220 has: a first sliding portion 221 and a second sliding portion 222 that slide on the inner peripheral surface of the accommodating hole 7c and that are provided by being arranged in succession in this order from the biasing unit S1 side; a valve portion 223 that is formed to have a conical shape projecting from the second sliding portion 222 in the axial direction; an annular groove 224 that is provided between the first sliding portion 221 and the second sliding portion 222; and a rod portion 227 that has a smaller diameter than the first sliding portion 221 and that extends from an end surface of the first sliding portion 221 toward a plunger 272.

A communicating passage 221a and a communicating passage 222a, each of which is formed by a groove or a planar notch extending along the axial direction, are formed in outer peripheral surfaces of the first sliding portion 221 and the second sliding portion 222, respectively. With such a configuration, the working oil discharged from the communicating passage 7f to the drain chamber 12 can flow into the biasing unit S1 (the base member 71) through the communicating passage 221a and the communicating passage 222a.

Next, the biasing unit S1 will be described.

The biasing unit S1 has: the base member 71; the plunger 272 that is slidably accommodated in the base member 71 and that presses the pilot poppet 220; the spring 74 serving as the first biasing member that is provided on the opposite side of the plunger 272 from the pilot poppet 220 with the plunger 272 interposed therebetween and that biases the pilot poppet 220 in the valve closing direction via the plunger 272; the coil 75 that is supported by the base member 71 and that applies, to the plunger 272, an opposing counterforce against the biasing force exerted by the spring 74 when the electric current is applied; the yoke 76 that is provided so as to surround the coil 75; the fixed iron core 77 that is attached to the yoke 76; and the adjusting member 279 that is attached to the fixed iron core 77.

The plunger 272 is made of a magnetic material. The plunger 272 is formed with a plurality of through holes 272b that are formed so as to penetrate therethrough in the axial direction and through which the working oil flows.

The adjusting member 279 is a columnar member screwed to the fixed iron core 77. By moving the adjusting member 279 in the axial direction relative to the fixed iron core 77, it is possible to adjust the biasing force exerted by the spring 74. Movement of the adjusting member 279 in the axial direction is restricted by tightening the lock nut 80.

The adjusting member 279 has: an end surface 279a against which one end of the spring 74 abuts; the through hole 279b that penetrates the adjusting member 279 in the axial direction and connects the spring chamber 78 and the outside; and a screw portion 279c for connecting with external piping. Piping (not shown) that communicates with the low-pressure passage L or with a tank is connected to the screw portion 279c. Note that the adjusting member 279 of this embodiment serves as the "support member" in the scope of claims.

Next, the operation of the electromagnetic relief valve 200 will be described.

The working oil in the high-pressure passage H is guided to the communicating passage 7f through the pilot passage 10 and the back pressure chamber 8. When the pressure of the working oil guided to the communicating passage 7f reaches the set pressure (the cracking pressure) of the pilot poppet 220 set by the biasing unit S1, in other words, when the biasing force that is generated by the pressure of the working oil guided to the communicating passage 7f and that acts on the pilot poppet 220 in the valve opening direction becomes larger than the biasing force exerted by the biasing unit S1 acting on the pilot poppet 220 in the valve closing direction, the valve portion 223 of the pilot poppet 220 is separated from the seat portion 7g.

When the valve portion 223 of the pilot poppet 220 is separated from the seat portion 7g, the working oil in the back pressure chamber 8 flows into the spring chamber 78 through the communicating passage 7f, the drain chamber 12, the communicating passage 222a, the annular groove 224, the communicating passage 221a, the through holes 30b, and the through holes 272b. The working oil that has flowed into the spring chamber 78 is discharged to the outside through the through hole 279b of the adjusting member 279. Note that, in this embodiment, the through holes 272b of the plunger 272 serve as the "first communicating passage" in the scope of claims, and the through hole 279b of the adjusting member 279 serves as the "discharge flow path" in the scope of claims.

As described above, the electromagnetic relief valve 200 of this embodiment is also configured such that the working oil discharged from the back pressure chamber 8 during the relief operation is discharged to the outside through the spring chamber 78. With such a configuration, because the air trapped in the spring chamber 78 can be discharged to the outside together with the working oil, it is possible to suppress the occurrence of the oscillation of the plunger 272 due to the trapped air.

In addition, the electromagnetic relief valve 200 is configured such that the working oil that has passed through the through holes 272b of the plunger 272 flows from one end side to the other end side of the spring chamber 78, and so, it is possible to reliably discharge the air trapped in the spring chamber 78.

### <Third Embodiment>

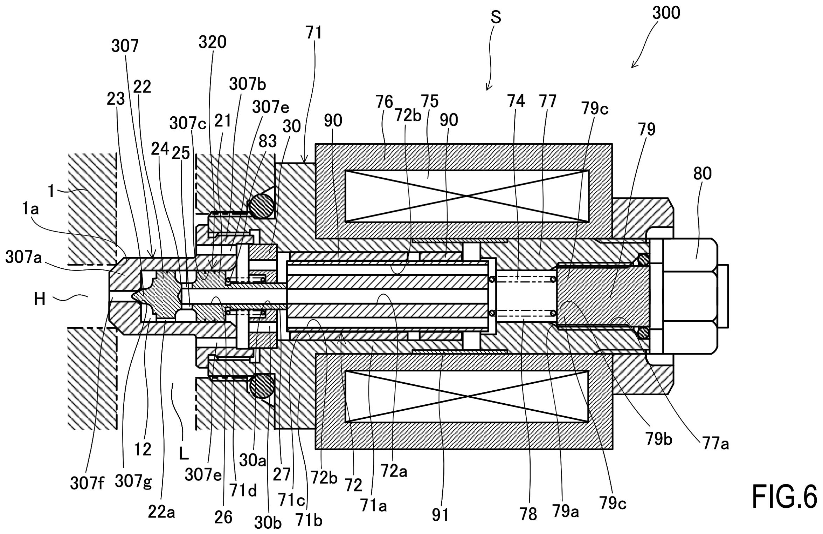

An electromagnetic relief valve 300 according to a third embodiment will be described with reference to FIG. 6. FIG. 6 is a sectional view of the electromagnetic relief valve 300.

The electromagnetic relief valve 100 according to the first embodiment is a pilot-operated electromagnetic relief valve, whereas the electromagnetic relief valve 300 according to the third embodiment differs in that it is a direct-acting type electromagnetic relief valve. Specifically, the electromagnetic relief valve 300 differs in that the pilot poppet 20 according to the first embodiment functions as the main poppet (a main poppet 320), and the sleeve 7 according to the first embodiment and a sleeve 307 according to the third embodiment have different shapes. Note that, the pilot poppet 20 of the electromagnetic relief valve 100 according to the first embodiment and the main poppet 320 of the electromagnetic relief valve 300 according to the third embodiment have the same shape. In the following, only points different from the electromagnetic relief valve 100 according to the first embodiment will be described, and the same configurations are given the same reference numerals and descriptions thereof will be omitted.

As shown in FIG. 6, the sleeve 307 of the electromagnetic relief valve 300 has: a tip end portion 307a that is inserted into the apparatus main body 1; a base-end portion 307b that is connected to the base member 71 of the biasing unit S; an accommodating hole 307c that opens at an end surface of the base-end portion 307b on the biasing unit S side in the axial direction; and a plurality of through holes 307e that penetrate through the base-end portion 307b in the axial direction on the outer circumferential side of the accommodating hole 307c of the base-end portion 307b.

The tip end portion 307a is seated onto the seat portion 1a that is formed between the high-pressure passage H and the low-pressure passage L of the apparatus main body 1.

In addition, the sleeve 307 is formed with a communicating passage 307f that has one end opening to the high-pressure passage H and the other end opening to a bottom surface of the accommodating hole 307c and that communicates the high-pressure passage H with the accommodating hole 307c.

A seat portion 307g, onto and from which the valve portion 23 of the main poppet 320 is seated and separated, is provided at an opening end of the communicating passage 307f that opens to the accommodating hole 307c. The seat portion 307g is formed such that its central axis coincides with the central axis of the accommodating hole 307c. Note that, in this embodiment, the communicating passage 307f serves as the "passage on the high-pressure side" in the scope of claims. In addition, the accommodating hole 307c of the sleeve 307 serves as the "valve body accommodating chamber" in the scope of claims.

Next, the operation of the electromagnetic relief valve 300 will be described.

The working oil in the high-pressure passage H is guided to the communicating passage 307f. When the pressure of the working oil guided to the communicating passage 307f reaches the set pressure (the cracking pressure) of the main poppet 320 set by the biasing unit S, in other words, when the biasing force that is generated by the pressure of the working oil guided to the communicating passage 307f and that acts on the main poppet 320 in the valve opening direction becomes larger than the biasing force exerted by the biasing unit S acting on the main poppet 320 in the valve closing direction, the valve portion 23 of the main poppet 320 is separated from the seat portion 307g.

When the valve portion 23 of the main poppet 320 is separated from the seat portion 307g, the working oil in the high-pressure passage H flows into the spring chamber 78 through the communicating passage 307f, the drain chamber 12, the communicating passage 22a, the annular groove 24, the communication holes 25, the communicating passage 26, and a through hole 72a. Then, the working oil that has flowed into the spring chamber 78 is discharged to the low-pressure passage L through the through hole 72b, the through holes 30b, and the through holes 307e. As a result, the pressure in the high-pressure passage H is prevented from becoming abnormally high. Note that, in this embodiment, the passage from the drain chamber 12 to the low-pressure passage L serves as the "passage on the low-pressure side" in the scope of claims.

When the pressure in the high-pressure passage H is decreased, the valve portion 23 of the main poppet 320 is seated onto the seat portion 307g, and the communication between the communicating passage 307f and the drain chamber 12 is shut off.

As described above, even with the electromagnetic relief valve 300, because the working oil discharged from the high-pressure passage H during the relief operation passes through the spring chamber 78, it is possible to discharge the air trapped in the spring chamber 78 to the low-pressure passage L together with the working oil. Thus, it is possible to suppress the occurrence of the oscillation of the plunger 72 due to the trapped air.

### <Fourth Embodiment>

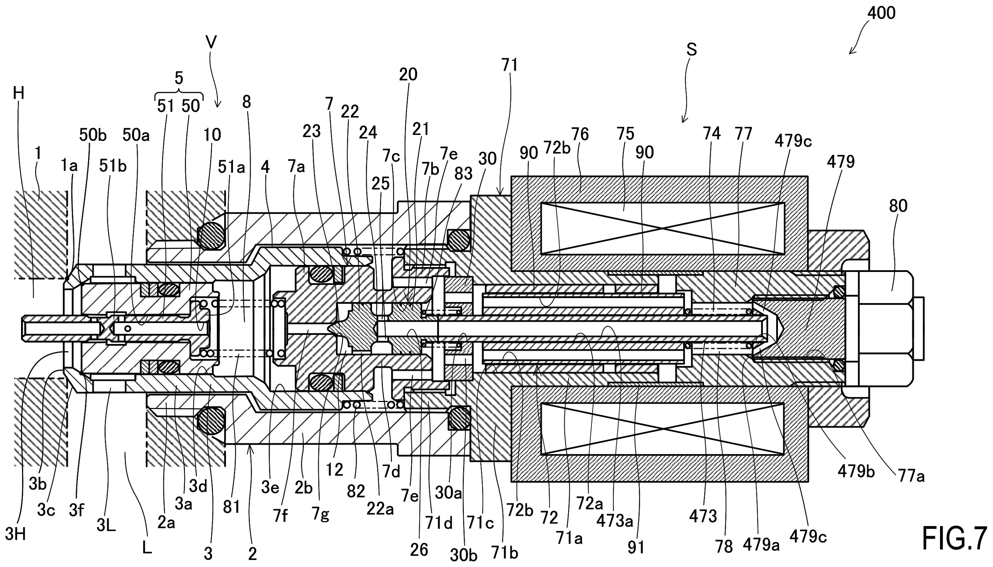

An electromagnetic relief valve 400 according to a fourth embodiment will be described with reference to FIG. 7. FIG. 7 is a sectional view of the electromagnetic relief valve 400.

The electromagnetic relief valve 400 according to the fourth embodiment differs from the electromagnetic relief valve 100 according to the first embodiment in that it includes a rod 473 that penetrates through the plunger 72, and in that an adjusting member 479 includes a recessed portion 479b into which an end portion of the rod 473 enters. In the following, only points different from the electromagnetic relief valve 100 according to the first embodiment will be described, and the same configurations are given the same reference numerals and descriptions thereof will be omitted.

As shown in FIG. 7, the electromagnetic relief valve 400 includes the rod 473 that is fixed to the plunger 72 and that presses the pilot poppet 20. Note that the rod 473 is included in the "plunger portion" in the scope of claims and serves as a "guide portion" in the scope of claims.

The rod 473 is inserted into a through hole 472a that is provided in the plunger 72. The rod 473 is formed by a rod-shaped member and has a through hole 473a serving as the first communicating passage penetrating therethrough in the axial direction. One end of the through hole 473a faces (communicates with) the communicating passage 26 of the pilot poppet 20.

The adjusting member 479 includes: the recessed portion 479b that opens to an end surface 479a and into which the other end of the rod 473 enters; and a plurality of communicating passages 479c each having one end opening to the end surface 479a and the other end opening to a side surface of the recessed portion 479b. Because the other end of the rod 473 enters the recessed portion 479b, one end of the through hole 473a of the rod 473 is connected to an interior of the recessed portion 479b. With such a configuration, the working oil that has passed through the through hole 473a of the rod 473 is guided to the spring chamber 78 through the recessed portion 479b and the communicating passages 479c.

With the electromagnetic relief valve 400 configured as described above, when the valve portion 23 of the pilot poppet 20 is separated from the seat portion 7g, the working oil in the back pressure chamber 8 flows into the spring chamber 78 through the communicating passage 7f, the drain chamber 12, the communicating passage 22a, the annular groove 24, the communication holes 25, the communicating passage 26, the through hole 473a, the recessed portion 479b, and the communicating passages 479c. The working oil that has flowed into the spring chamber 78 is discharged to the low-pressure passage L through the through hole 72b, the through holes 30b, the through holes 7e, the outside region of the intermediate portion 7d, and the communicating passage 4.

Because the communicating passages 479c open to the end surface 479a of the adjusting member 479, the working oil discharged from the back pressure chamber 8 passes through the entire region from one end to the other end of the spring chamber 78. Therefore, by employing such a configuration, it is possible to more reliably discharge the air trapped in corners of the spring chamber 78.

Here, a modification will be described.

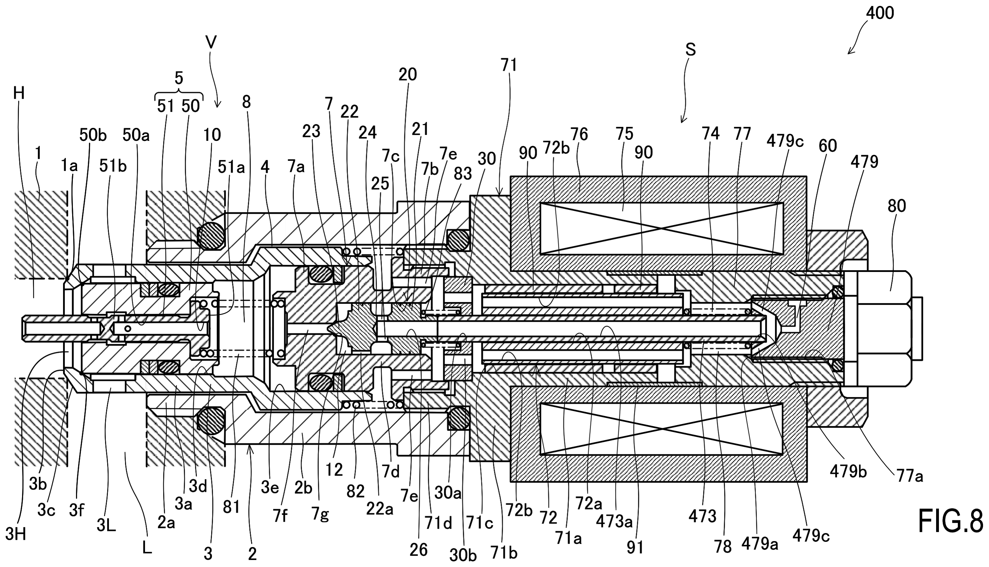

For example, as shown in FIG. 8, in the electromagnetic relief valve 400, the adjusting member 479 may be formed with a communicating passage 60 that communicates the recessed portion 479b with a threaded engagement portion between the adjusting member 479 and the fixed iron core 77. As described above, by guiding the working oil from the communicating passage 60 to the threaded engagement portion between the adjusting member 479 and the fixed iron core 77, and furthermore, by guiding the working oil from the threaded engagement portion to the spring chamber 78, it is possible to discharge the air trapped in the threaded engagement portion between the adjusting member 479 and the fixed iron core 77 to the outside through the spring chamber 78. Note that, one end of the communicating passage 60 may be directly communicated with the spring chamber 78 instead of the recessed portion 479b.

### <Fifth Embodiment>

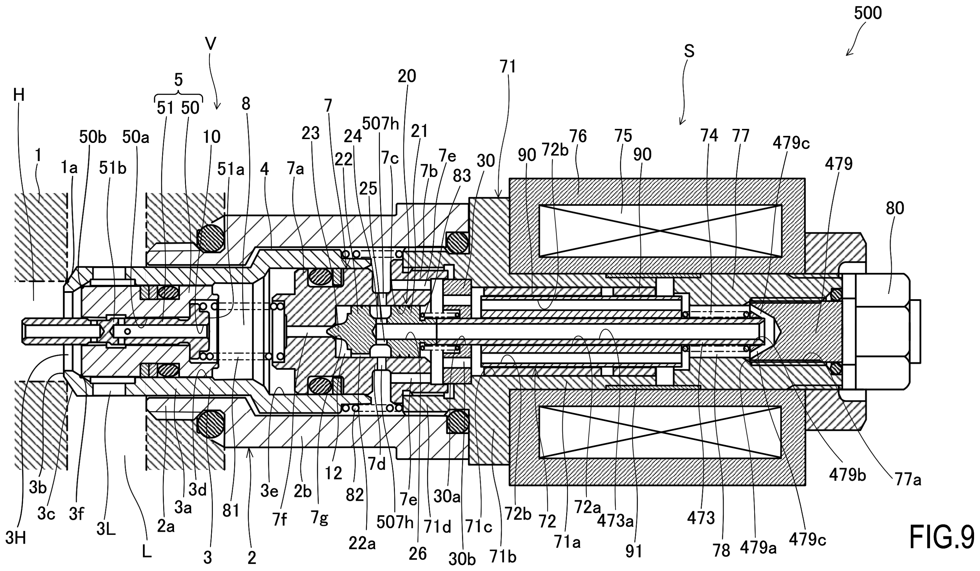

An electromagnetic relief valve 500 according to a fifth embodiment will be described with reference to FIG. 9. FIG. 9 is a sectional view of the electromagnetic relief valve 500.

The electromagnetic relief valve 500 according to the fifth embodiment differs from the electromagnetic relief valve 400 according to the fourth embodiment in that it includes communicating passages 507h serving as a third communicating passage for directly guiding the working oil discharged from the passage on the high-pressure side (the communicating passage 7f) to the discharge flow path (the communicating passage 4). The electromagnetic relief valve 500 will be specifically described below with reference to FIG. 9.

As shown in FIG. 9, in the electromagnetic relief valve 500, the communicating passages 507h that communicate the accommodating hole 7c with the outside region of the intermediate portion 7d are provided in the sleeve 7. The communicating passages 507h are formed by a plurality of through holes that penetrate through the intermediate portion 7d of the sleeve 7.

The communicating passages 507h directly guide a part of the working oil, which has been discharged from the back pressure chamber 8 to the drain chamber 12 through the communicating passage 7f when the pilot poppet 20 is opened, to the low-pressure passage L through the communicating passage 4. In other words, the communicating passages 507h discharge the part of the working oil, which has been discharged from the back pressure chamber 8 to the drain chamber 12 through the communicating passage 7f, by bypassing the spring chamber 78.

Note that because the operation of the electromagnetic relief valve 500 is the same as that of the electromagnetic relief valve 400 according to the fourth embodiment, the description thereof will be omitted.

Also with the electromagnetic relief valve 500, because the working oil discharged from the high-pressure passage H during relief operation passes through the spring chamber 78, it is possible to discharge the air trapped in the spring chamber 78 to the low-pressure passage L together with the working oil. Therefore, it is possible to suppress the occurrence of the oscillation of the plunger 72 due to the trapped air.

In the electromagnetic relief valve 400 according to the fourth embodiment, all of the working oil discharged to the drain chamber 12 flows into the spring chamber 78. As a result, when the flow rate of the working oil discharged to the drain chamber 12 is large, the pressure in the spring chamber 78 is increased, and there is a risk in that oscillation is induced as a result of a biasing force, which biases the pilot poppet 20 in the valve closing direction, being exerted on the plunger 72. Therefore, in the electromagnetic relief valve 500 of this embodiment, a part of the working oil discharged to the drain chamber 12 is discharged to the low-pressure passage L by bypassing the spring chamber 78 through the communicating passages 507h. With such a configuration, because the flow rate of the working oil flowing into the spring chamber 78 can be reduced, the increase in the pressure in the spring chamber 78 is suppressed, and so, it is possible to more reliably suppress the oscillation of the plunger 72.

### <Sixth Embodiment>

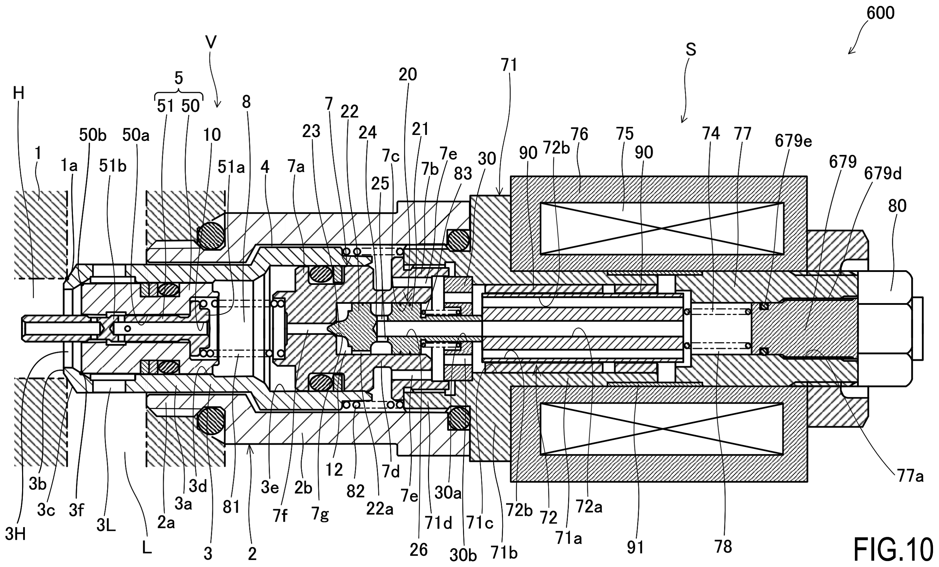

An electromagnetic relief valve 600 according to a sixth embodiment will be described with reference to FIG. 10. FIG. 10 is a sectional view of the electromagnetic relief valve 600. The electromagnetic relief valve 600 according to the sixth embodiment differs from the electromagnetic relief valve 100 according to the first embodiment in the position of an O-ring 679e provided on an adjusting member 679. In the following, only points different from the electromagnetic relief valve 100 according to the first embodiment will be described, and the same configurations are given the same reference numerals and descriptions thereof will be omitted.

As shown in FIG. 10, in the electromagnetic relief valve 600, the adjusting member 679 has: a male screw portion 679d that is screwed with a female screw portion formed in the through hole 77a of the fixed iron core 77; and the O-ring 679e that is provided closer to the spring chamber 78 side than the male screw portion 679d and seals between the adjusting member 679 and the fixed iron core 77.

For example, in the electromagnetic relief valve 100 shown in FIG. 1, a washer 79f for holding an O-ring that seals between the adjusting member 79 and the fixed iron core 77 is provided, but in the electromagnetic relief valve 600, because the O-ring 679e is provided closer to the spring chamber 78 side than the male screw portion 679d, the washer 79f can be made unnecessary. As a result, it is possible to reduce the number of parts.

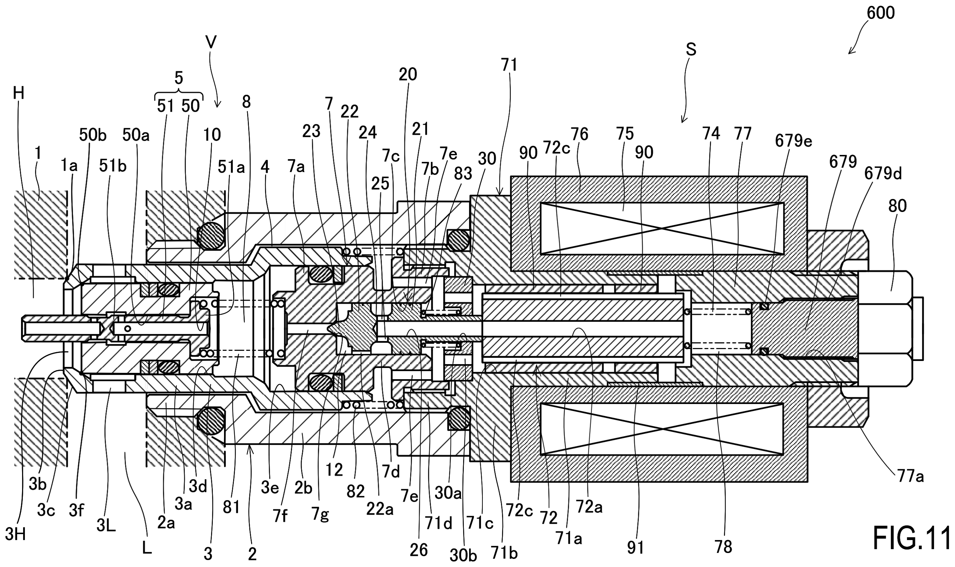

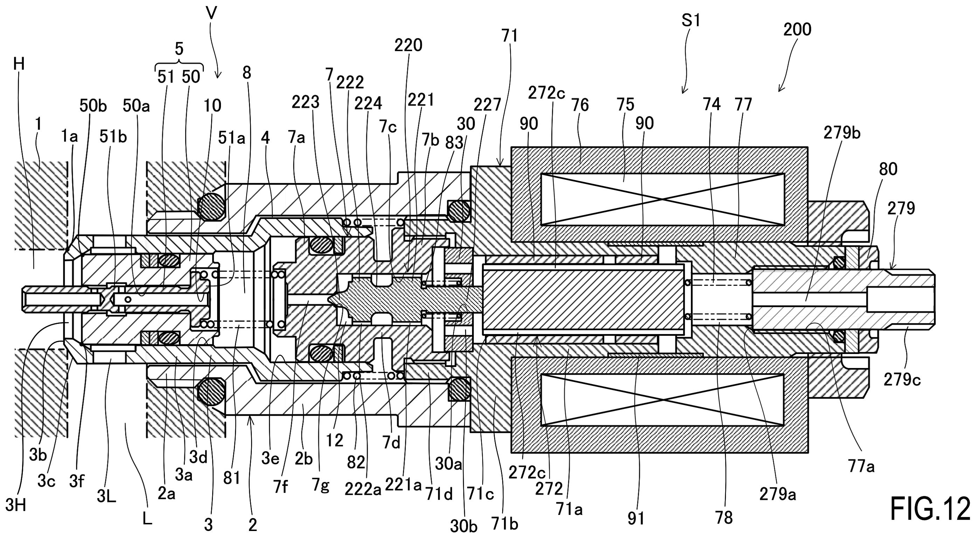

In the electromagnetic relief valves 100, 300 to 600 of the first, and third to sixth embodiments described above, a case in which the through hole 72b is formed as the passage (the discharge flow path) for the working oil in the plunger 72 has been described as an example, but instead of this configuration, a slit 72c that opens to both end surfaces of the plunger 72 may be formed on an outer peripheral surface of the plunger 72 (see FIG. 11). In addition, in the electromagnetic relief valve 200 of the second embodiment, a case in which the through holes 272b are formed as the passages (the first communicating passage) for the working oil in the plunger 272 has been described as an example, but instead of this configuration, a slit 272c that opens to both end surfaces of the plunger 272 may be formed on an outer peripheral surface of the plunger 272 (see FIG. 12). In these cases, for example, because the working oil passes through a gap between the guide members 90 aligned in the axial direction and a gap between the base member 71 and the fixed iron core 77 in the axial direction, it is possible to suppress entrapment of the air in these gaps.

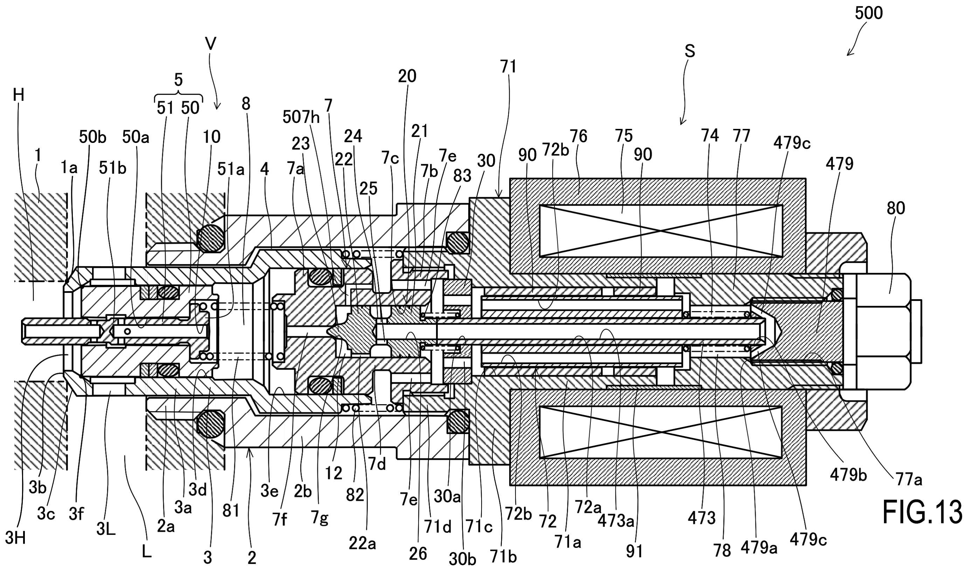

In addition, in the electromagnetic relief valve 500 according to the fifth embodiment (see FIG. 9), a case in which, in order to directly guide the working oil discharged from the passage on the high-pressure side (the communicating passage 7f) to the discharge flow path (the communicating passage 4), the communicating passages 507h that communicate the accommodating hole 7c with the outside region of the intermediate portion 7d are provided in the sleeve 7 has been described, but the present invention is not limited thereto. For example, as shown in FIG. 13, the communicating passages 507h may be formed so as to communicate with the discharge flow path (the communicating passage 4) from the space in the drain chamber 12 that is defined by the bottom surface of the accommodating hole 7c and the second sliding portion 22.

The configuration, operation, and effects of the embodiments of the present invention configured as described above will be collectively described.

The electromagnetic relief valve 100, 200, 300, 400, 500, 600 includes: the pilot poppet 20, 220, the main poppet 320 (the valve body) configured to allow or shut off communication between the passage on the high-pressure side (the communicating passage 7f, the communicating passage 307f) and the passage on the low-pressure side (the passage from the drain chamber 12 to the low-pressure passage L); and the biasing unit S, S1 configured to bias the pilot poppet 20, 220, the main poppet 320 (the valve body) in the valve closing direction, wherein the biasing unit S, S1 has: the plunger portion (the plunger 72, 272, the rod 473) configured to press the pilot poppet 20, 220, the main poppet 320 (the valve body); the spring 74 (the first biasing member) provided on the opposite side of the plunger portion (the plunger 72, 272, the rod 473) from the pilot poppet 20, 220, the main poppet 320 (the valve body) with the plunger portion (the plunger 72, 272, the rod 473) interposed therebetween, the spring 74 (the first biasing member) being configured to bias the pilot poppet 20, 220, the main poppet 320 (the valve body) in the valve closing direction via the plunger portion (the plunger 72, 272, the rod 473); the spring chamber 78 (the biasing member chamber) in which the spring 74 (the first biasing member) is accommodated; and the coil 75 configured to apply, to the plunger portion (the plunger 72, 272, the rod 473), the opposing counterforce against the biasing force exerted by the spring 74 (the first biasing member) when the electric current is applied, the plunger portion (the plunger 72, 272, the rod 473) is provided with the through hole 72a, 473a, 272b (the first communicating passage) configured to guide the working oil (the working fluid) to the spring chamber 78 (the biasing member chamber), the working oil (the working fluid) being discharged from the passage on the high-pressure side when the pilot poppet 20, 220, the main poppet 320 (the valve body) is opened, and the electromagnetic relief valve 100, 200, 300, 400, 500, 600 further includes the discharge flow path, the discharge flow path being configured to discharge the working oil (the working fluid) to the outside at a pressure lower than the pressure in the through hole 72a, 473a, 272b (the first communicating passage) when the working fluid on the high-pressure side is guided from the spring chamber 78 (the biasing member chamber) to the through hole 72a, 473a, 272b (the first communicating passage).

With this configuration, because the working oil (the working fluid) discharged from the passage on the high-pressure side (the communicating passage 7f, the communicating passage 307f) is guided to the spring chamber 78 (the biasing member chamber) through the through hole 72a, 473a, 272b (the first communicating passage) that is provided in the plunger portion (the plunger 72, 272, the rod 473), it is possible to discharge the air in the spring chamber 78 (the biasing member chamber) in which the spring 74 (the first biasing member) is accommodated to the outside together with the working oil (the working fluid). Therefore, it is possible to prevent the air from being trapped in the spring chamber 78 (the biasing member chamber) in which the spring 74 (the first biasing member) that biases the plunger portion (the plunger 72, 272, the rod 473) is accommodated.

In addition, in the electromagnetic relief valve 100, 400, 500, the plunger portion (the plunger 72, the rod 473) has: the plunger 72 made of a magnetic material; and the guide portion (the pipe 40, the guide portion 72d, the rod 473) extending from the end surface of the plunger 72 toward the spring chamber 78 (the biasing member chamber), the guide portion (the pipe 40, the guide portion 72d, the rod 473) being hollow and being configured to guide the working oil (the working fluid) passing through the through hole 72a, 473a (the first communicating passage) to the spring chamber 78 (the biasing member chamber).

With this configuration, because the working oil (the working fluid) can be caused to flow to the distal side in the spring chamber 78 (the biasing member chamber), it is possible to more reliably discharge the air trapped in the spring chamber 78 (the biasing member chamber).

In addition, in the electromagnetic relief valve 100, the guide portion is the pipe 40 attached to the plunger 72.

With this configuration, because it is only necessary to attach the pipe 40 to the plunger 72, it is possible to easily provide the guide portion. In addition, with this configuration, because the guide portion is configured by the pipe 40, it is possible to easily adjust the length of the guide portion.

In the electromagnetic relief valve 100, the guide portion 72d is formed integrally with the plunger 72.

With this configuration, because the guide portion 72d is formed integrally with the plunger 72, it is possible to reduce the number of parts.

In the electromagnetic relief valve 400, 500, the guide portion is the hollow rod 473, the hollow rod 473 being configured to penetrate the plunger 72 in the axial direction and to press the pilot poppet 20 (the valve body).

With this configuration, because it is only necessary to attach the rod 473 to the plunger 72, it is possible to easily provide the guide portion. In addition, because the pilot poppet 20 (the valve body) is pressed by the rod 473, it is possible to suppress direct application of load to the plunger 72 and to prevent the plunger 72 from being damaged.

In the electromagnetic relief valve 100, the plunger 72 is formed with the projected portion 72e, the projected portion 72e being configured to project out from the end surface on the pilot poppet 20 (the valve body) side and to press the pilot poppet 20 (the valve body).

With this configuration, there is no need to perform the surface alignment on the entire end surface of the plunger 72 on the pilot poppet 20 side in order to prevent uneven contact between the pilot poppet 20 (the valve body) and the plunger 72. In other words, with this configuration, because only the tip end surface of the projected portion 72e needs to be subjected to the surface alignment, it is possible to shorten the processing time.

In addition, in the electromagnetic relief valve 400, 500, the biasing unit S further has the adjusting member 479 (the support member) configured to support the end portion of the spring chamber 78 (the biasing member chamber) on the opposite side from the plunger portion (the plunger 72), the adjusting member 479 (the support member) is formed with the recessed portion 479b opening at the end surface facing one end of the plunger portion (the plunger 72), and one end of the through hole 473a (the first communicating passage) is connected within the recessed portion 479b.

With this configuration, because the one end side of the through hole 473a (the first communicating passage) is connected within the recessed portion 479b that is formed in the adjusting member 479 (the support member), it is possible to guide the working oil (the working fluid) to the vicinity of the end portion of the spring 74 (the first biasing member) where the air tends to be trapped. With such a configuration, it is possible to more reliably prevent the air from being trapped in the spring chamber 78 (the biasing member chamber).

In the electromagnetic relief valve 400, the biasing unit S further includes the fixed iron core 77, the fixed iron core 77 being configured to generate the magnetic force when the electric current is applied to the coil 75 and to which the adjusting member 479 (the support member) is movably screwed, and the adjusting member 479 (the support member) is provided with the communicating passage 60, the communicating passage 60 being configured to communicate at least one of the recessed portion 479b and the spring chamber 78 (the biasing member chamber) with the threaded engagement portion between the adjusting member 479 (the support member) and the fixed iron core 77.

With this configuration, by guiding the working oil from the communicating passage 60 to the threaded engagement portion between the adjusting member 479 (the support member) and the fixed iron core 77, and furthermore, by guiding the working oil from the threaded engagement portion to the spring chamber 78, it is possible to discharge the air trapped in the threaded engagement portion between the adjusting member 479 (the support member) and the fixed iron core 77 to the outside through the spring chamber 78.

In the electromagnetic relief valve 100, 300, 400, 500, 600, the discharge flow path (the through hole 72b, the slit 72c) is provided in the plunger portion (the plunger 72).

With this configuration, because the discharge flow path (the through hole 72b, the slit 72c) is provided in the plunger portion (the plunger 72), it is not necessary to separately secure a space for providing the discharge flow path.

In addition, in the electromagnetic relief valve 100, 300, 400, 500, 600, the discharge flow path is the slit 72c formed on the outer peripheral surface of the plunger portion (the plunger 72), the slit 72c being configured to open to both end surfaces of the plunger portion (the plunger 72).

With this configuration, because the working oil (the working fluid) passes through the gap between the guide members 90 aligned in the axial direction and a gap between the base member 71 and the fixed iron core 77 in the axial direction, it is possible to suppress entrapment of the air in these gaps.

In addition, in the electromagnetic relief valve 200, the first communicating passage is the slit 272c formed on the outer peripheral surface of the plunger portion (the plunger 272), the slit 272c being configured to open to both end surfaces of the plunger portion (the plunger 272).

With this configuration, because the working oil (the working fluid) passes through the gap between the guide members 90 aligned in the axial direction and a gap between the base member 71 and the fixed iron core 77 in the axial direction, it is possible to suppress entrapment of the air in these gaps.

The electromagnetic relief valve 100, 300, 400, 500, 600 further includes the accommodating hole 7c, the accommodating hole 307c (the valve body accommodating chamber) configured to accommodate the pilot poppet 20, the main poppet 320 (the valve body) movably, wherein the pilot poppet 20, the main poppet 320 (the valve body) has: the first sliding portion 21 and the second sliding portion 22 configured to slide on the inner peripheral surface of the accommodating hole 7c, the accommodating hole 307c (the valve body accommodating chamber), the first sliding portion 21 and the second sliding portion 22 being provided by being arranged in succession in this order from the plunger 72 side; and the communication holes 25 and the communicating passage 26 (the second communicating passage) configured to open between the first sliding portion 21 and the second sliding portion 22, the communication holes 25 and the communicating passage 26 (the second communicating passage) being connected to the through hole 72a, 473a (the first communicating passage) through the interior of the pilot poppet 20, the main poppet 320 (the valve body).

With this configuration, because the electromagnetic relief valve 100, 300, 400, 500, 600 is configured such that the working oil (the working fluid) discharged from the passage on the high-pressure side (the communicating passage 7f, the communicating passage 307f) passes through the interior of the pilot poppet 20, the main poppet 320 (the valve body) and the plunger portion (the plunger 72, the rod 473), it is possible to reduce the size of the device.

The electromagnetic relief valve 500 further includes the sleeve 7 (accommodating member) in which the accommodating hole 7c (the valve body accommodating chamber) is formed, the accommodating hole 7c (the valve body accommodating chamber) being configured to accommodate the pilot poppet 20 (the valve body) movably, wherein the sleeve 7 (accommodating member) is provided with the communicating passages 507h (the third communicating passage) configured to communicate the accommodating hole 7c (the valve body accommodating chamber) with the discharge flow path, the communicating passages 507h (the third communicating passage) being configured to directly guide, to the discharge flow path, a part of the working oil discharged from the passage on the high-pressure side when the pilot poppet 20 (the valve body) is opened.

With this configuration, a part of the working oil discharged to the drain chamber 12 can be discharged to the low-pressure passage L directly from the communicating passages 507h (the third communicating passage) by bypassing the spring chamber 78 (the biasing member chamber). Thus, because the flow rate of the working oil flowing into the spring chamber 78 (the biasing member chamber) can be reduced, the increase in the pressure in the spring chamber 78 (the biasing member chamber) is suppressed, and so, it is possible to suppress the oscillation of the plunger 72.

The electromagnetic relief valve 100, 200, 300, 400, 500, 600 further includes the spring 83 (the second biasing member) configured to directly bias the pilot poppet 20, 220, the main poppet 320 (the valve body) in the valve closing direction.

With this configuration, when the plunger portion (the plunger 72, 272, the rod 473) becomes unable to move and the pilot poppet 20, 220, the main poppet 320 (the valve body) cannot be pressed by the plunger portion (the plunger 72, 272, the rod 473) in the valve closing direction, it is possible to close the pilot poppet 20, 220, the main poppet 320 (the valve body) by the biasing force exerted by the spring 83 (the second biasing member).

In the electromagnetic relief valve 200, the biasing unit S further includes the adjusting member 279 (the support member) configured to support the end portion of the spring 74 (the first biasing member) on the opposite side from the plunger portion (the plunger 272), and the discharge flow path is the through hole 279b formed in the adjusting member 279 (the support member), the through hole 279b being configured to communicate the spring 74 (the first biasing member) with the outside.

With this configuration, because the working oil (the working fluid) that has been guided to the spring chamber 78 (the biasing member chamber) is directly discharged from the through hole 279b formed in the adjusting member 279 (the support member) to the outside, it is possible to make the length of the flow path for discharge shorter. As a result, it is possible to reduce the flow path resistance.

Embodiments of this invention were described above, but the above embodiments are merely examples of applications of this invention, and the technical scope of this invention is not limited to the specific constitutions of the above embodiments.

In the above-described embodiments, the present invention can also be applied to an electromagnetic relief valve that includes the adjusting member 79, 279, but does not include a member for adjusting the biasing force exerted by the spring 74 as described above. In addition, it is also possible to change the shapes of the pilot poppet 20, 220, the main poppet 320, and so forth as appropriate as long as they do not depart from the technical concept of the present invention.

In addition, in the electromagnetic relief valve 400 shown in FIG. 8, a case in which the adjusting member 479 includes the communicating passage 60 that communicates the recessed portion 479b with the threaded engagement portion between the adjusting member 479 and the fixed iron core 77 has been described, but instead of this configuration, in other embodiments, for example, in the electromagnetic relief valve 100, the adjusting member 79 may include the communicating passage 60 that communicates the spring chamber 78 with the threaded engagement portion between the adjusting member 79 and the fixed iron core 77.

In addition, the communicating passages 507h of the electromagnetic relief valve 500 according to the fifth embodiment may be provided in the electromagnetic relief valve 100 and the like.

This application claims priority based on Japanese Patent Application No.2023-112833 filed with the Japan Patent Office on July 10, 2023, the entire contents of which are incorporated into this specification.

## Claims

1. An electromagnetic relief valve comprising:
a valve body configured to allow or shut off communication between a passage on a high-pressure side and a passage on a low-pressure side; and
a biasing unit configured to bias the valve body in a valve closing direction, wherein
the biasing unit has:
a plunger portion configured to press the valve body;
a first biasing member provided on an opposite side of the plunger portion from the valve body with the plunger portion interposed therebetween, the first biasing member being configured to bias the valve body in the valve closing direction via the plunger portion;
a biasing member chamber in which the first biasing member is accommodated; and
a coil configured to apply, to the plunger portion, an opposing counterforce against a biasing force exerted by the first biasing member when electric current is applied,
the plunger portion is provided with a first communicating passage configured to guide working fluid to the biasing member chamber, the working fluid being discharged from the passage on the high-pressure side when the valve body is opened, and
the electromagnetic relief valve further comprises a discharge flow path, the discharge flow path being configured to discharge the working fluid to outside at a pressure lower than a pressure in the first communicating passage when the working fluid on the high-pressure side is guided from the biasing member chamber to the first communicating passage.

2. The electromagnetic relief valve according to claim 1, wherein
the plunger portion has:
a plunger made of a magnetic material; and
a guide portion extending from an end surface of the plunger toward the biasing member chamber, the guide portion being hollow and being configured to guide the working fluid passing through the first communicating passage to the biasing member chamber.

3. The electromagnetic relief valve according to claim 2, wherein
the guide portion is a pipe attached to the plunger.

4. The electromagnetic relief valve according to claim 2, wherein
the guide portion is formed integrally with the plunger.

5. The electromagnetic relief valve according to claim 2, wherein
the guide portion is a hollow rod, the hollow rod being configured to penetrate the plunger in an axial direction and to press the valve body.

6. The electromagnetic relief valve according to claim 2, wherein
the plunger is formed with a projected portion, the projected portion being configured to project out from an end surface on the valve body side and to press the valve body.

7. The electromagnetic relief valve according to claim 1, wherein
the biasing unit further has a support member configured to support an end portion of the first biasing member on an opposite side from the plunger portion,
the support member is formed with a recessed portion opening at an end surface facing one end of the plunger portion, and
one end of the first communicating passage opens within the recessed portion.

8. The electromagnetic relief valve according to claim 7, wherein
the biasing unit further comprising a fixed iron core, the fixed iron core being configured to generate a magnetic force when electric current is applied to the coil and to which the support member is movably screwed, and
the support member is provided with a communicating passage, the communicating passage being configured to communicate at least one of the recessed portion and the biasing member chamber with a threaded engagement portion between the support member and the fixed iron core.

9. The electromagnetic relief valve according to claim 1, wherein
the discharge flow path is provided in the plunger portion.

10. The electromagnetic relief valve according to claim 1, wherein
the discharge flow path is a slit formed on an outer peripheral surface of the plunger portion, the slit being configured to open to both end surfaces of the plunger portion.

11. The electromagnetic relief valve according to claim 1, wherein
the first communicating passage is a slit formed on the outer peripheral surface of the plunger portion, the slit being configured to open to both end surfaces of the plunger portion.

12. The electromagnetic relief valve according to claim 1, further comprising
an accommodating member in which a valve body accommodating chamber is formed, the valve body accommodating chamber being configured to accommodate the valve body movably, wherein
the valve body has:
a first sliding portion and a second sliding portion configured to slide on an inner peripheral surface of the valve body accommodating chamber, the first sliding portion and the second sliding portion being provided by being arranged in succession in this order from the plunger portion side; and
a second communicating passage configured to open between the first sliding portion and the second sliding portion, the second communicating passage being connected to the first communicating passage through an interior of the valve body.

13. The electromagnetic relief valve according to claim 1, further comprising
an accommodating member in which a valve body accommodating chamber is formed, the valve body accommodating chamber being configured to accommodate the valve body movably, wherein
the accommodating member is provided with a third communicating passage configured to communicate the valve body accommodating chamber with the discharge flow path, the third communicating passage being configured to directly guide, to the discharge flow path, a part of the working fluid discharged from the passage on the high-pressure side when the valve body is opened.

14. The electromagnetic relief valve according to claim 1, further comprising
a second biasing member configured to directly bias the valve body in the valve closing direction.

15. The electromagnetic relief valve according to claim 1, wherein
the biasing unit further comprises a support member configured to support an end portion of the first biasing member on an opposite side from the plunger portion, and
the discharge flow path is a through hole formed in the support member, the through hole being configured to communicate the biasing member chamber with the outside.
